(19) **Europäisches Patentamt**

**European Patent Office**

**Office européen des brevets**

(11) **EP 1 152 312 A2**

(12) **EUROPEAN PATENT APPLICATION**

(43) Date of publication:
07.11.2001 Bulletin 2001/45

(51) Int Cl.⁷: **G05B 23/02**

(21) Application number: 01109957.9

(22) Date of filing: 24.04.2001

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI** | (72) Inventors:<br>• **Kamihira, Ichikai**<br>  **Iwata-shi, Shizuoka-ken (JP)**<br>• **Kaji, Hirotaka**<br>  **Iwata-shi, Shizuoka-ken (JP)** |
| (30) Priority: **24.04.2000 JP 2000123176** | (74) Representative: **Grünecker, Kinkeldey,**<br>**Stockmair & Schwanhäusser Anwaltssozietät**<br>**Maximilianstrasse 58**<br>**80538 München (DE)** |
| (71) Applicant: **YAMAHA HATSUDOKI KABUSHIKI**<br>**KAISHA**<br>**Iwata-shi Shizuoka-ken (JP)** | |

(54) **Control device and method for controlling characteristics of a control object**

(57)    Characteristic control device for controlling characteristics of a control object comprising a basic control module for controlling an output of the control object on the basis of specified input information and a control parameter, a characteristic control module for generating the control parameter, and a characteristic display means for displaying the characteristic of the control parameter. Said characteristic display means is provided for displaying details of the characteristic of the control parameter and a representation of the characteristic of the control parameter.

FIGURE 1

**Description**

This invention relates to a characteristic control device for controlling characteristics of a control object and to a method for controlling characteristics of a control object.

A technique is already proposed for automatically changing the characteristics of a basic control module for controlling a control object (namely the value of the parameter for determining the relation between input and output of the basic control module) according to the condition of use.

However, preference and skill of the user of the control object and the environment in which the control object is used are widely varied, so it is practically impossible to design a control device that can adapt to all.

Therefore, from a practical viewpoint, it is ideal that the characteristics of the control object are customized by individual users according to preference, skill, and use environment, irrespective of the control device being capable of changing the characteristic setting automatically or manually.

However, as the particulars of the control have reached high levels in recent years, control devices have become capable of making fairly detailed setting. Therefore, characteristics are changed subtly. As a result, even a specialist cannot evaluate customized results without using a dedicated analyzing device. Therefore, users having no analyzing device or expertise, even if they know how to customize, cannot substantially evaluate the customized results depending on feeling only.

To solve this problem, there may be an idea to attach to the control device a display device, as an analyzing device, capable of displaying customized control parameters and data of characteristics obtained with the customized control parameters.
However, it is very difficult for a user without expertise to understand what the data displayed on the display device means.

Alternatively, there maybe a method to display the customized control parameters and the characteristics obtained from those parameters with figures and pictures abstracted to some extent. With such a method, however, detailed setting of characteristics cannot be made because, even after taking a long period of time, the user cannot exactly grasp the relation between the control parameters and their characteristics.

It is an objective of the present invention to provide a characteristic control device for controlling characteristics of a control object and to a method for controlling characteristics of a control object allowing an a simple and easy usage.

According to the apparatus aspect of the present invention, said objective is solved by a characteristic control device for controlling characteristics of a control object comprising:
a basic control module for controlling an output of the control object on the basis of specified input information and a control parameter, a characteristic control module for generating the control parameter, and a characteristic display means for displaying the characteristic of the control parameter, wherein said characteristic display means is provided for displaying details of the characteristic of the control parameter and a representation of the characteristic of the control parameter.

According to the method aspect of the present invention said objective is solved by Method for controlling characteristics of a control object comprising:

- generating a control parameter,
- displaying the characteristic of the control parameter, wherein details of the characteristic of the control parameter and a representation of the characteristic of the control parameter are displayed,
- controlling an output of the control object on basis of specified input information and the control parameter.

It is an advantage of the present invention to provide a device and a method for controlling the characteristics of a control object, which enables even users without expertise to easily understand the characteristics of the control object and to learn the relation between the control parameters and the characteristics obtained from the control parameters while the user is using the characteristic control device.

Preferred embodiments of the present invention are laid down in the respective dependent claims.

In the following, the present invention is explained in greater detail with respect to several embodiments thereof in conjunction with the accompanying drawings, wherein:

FIG. 1    is a general block diagram of a constitution of a characteristic control device;

FIG. 2    generally shows the relation between a characteristic control device of the embodiment and an engine;

FIG. 3    is a general block diagram of the characteristic control device;

FIG. 4    is a general block diagram of an electronic throttle control module;

FIG. 5    shows graphs of several static characteristics of the throttle;

FIG. 6    shows graphs of several dynamic characteristics of the throttle;

FIG. 7    shows an example of coding the control parameters (throttle valve openings SP1, SP2, first-order time lag time constant DR, and acceleration compensation factor DR) as a single individual;

FIG. 8   is a flow chart showing the characteristic changing process in the characteristic control module;

FIG. 9   is a rough drawing of the characteristic display device;

FIG. 10   shows a concrete example of association between static characteristics and fish images;

FIG. 11   shows an image map of two-dimensional space represented with static characteristics (SP1 and SP2) on which fish images are plotted;

FIG. 12   is an image map on which the dynamic characteristics are allocated to fish images; and

FIG. 13   is a general flowchart of an evolutionary calculation module in case of using the hereditary algorithm as an evolutionary calculation method.

Several embodiments of the characteristic control device for a control object (hereinafter simply called the characteristic control device) will be described below in reference to appended drawings.

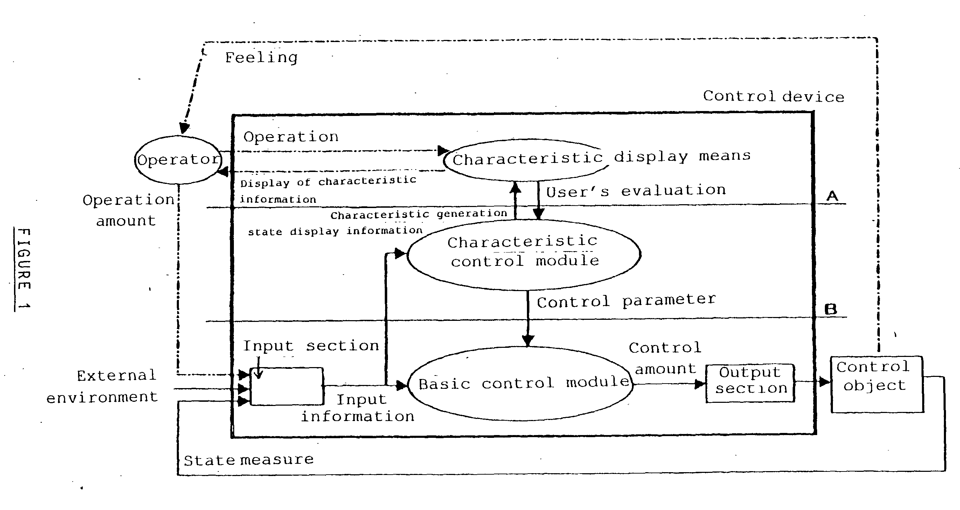

FIG. 1 is a general block diagram of a constitution of the characteristic control device.

As shown, the control device comprises; a basic control module which calculates the control amount for a control object on the basis of input information (amount of operation by the user, information obtained from external environment, state measure of the control object obtained from the control object) entered through an input section and controls the control object through an output section, a characteristic control module which generates the characteristics of the basic control module (control parameters) according to a specified evaluation standard, and a characteristic display means for showing information on the characteristics obtained with the characteristic control module.

The characteristic display means is constituted to be capable of simultaneously displaying a first piece of information displaying the particulars of the characteristic of the control parameter using numerical values and graphs, and a second piece of information displaying the particulars of the characteristic of the same control parameter in representations, such as in words, identifiable images, and sounds and rhythms capable of reminding the characteristics, that can be intuitively recognized by the user. This makes it possible for even users without expertise to easily understand the characteristic of the control object and to proceed with learning the relation between the control parameter and the characteristic obtained from the control parameter while the user is using the device.

The characteristic display means comprises an input means to enable the user to directly enter the evaluation of the control parameter in the process of generating the characteristic in the characteristic control module, so that the user can intervene in generating the characteristic in the characteristic control module.

Incidentally, while FIG. 1 shows a block diagram of a control device constituted with the basic control module, the characteristic control module, and the characteristic display means put together in a single unit, the embodiment is not limited to the single unit constitution but may be a separate constitution divided into upper and lower sections for example with the line A and/or line B in FIG. 1.

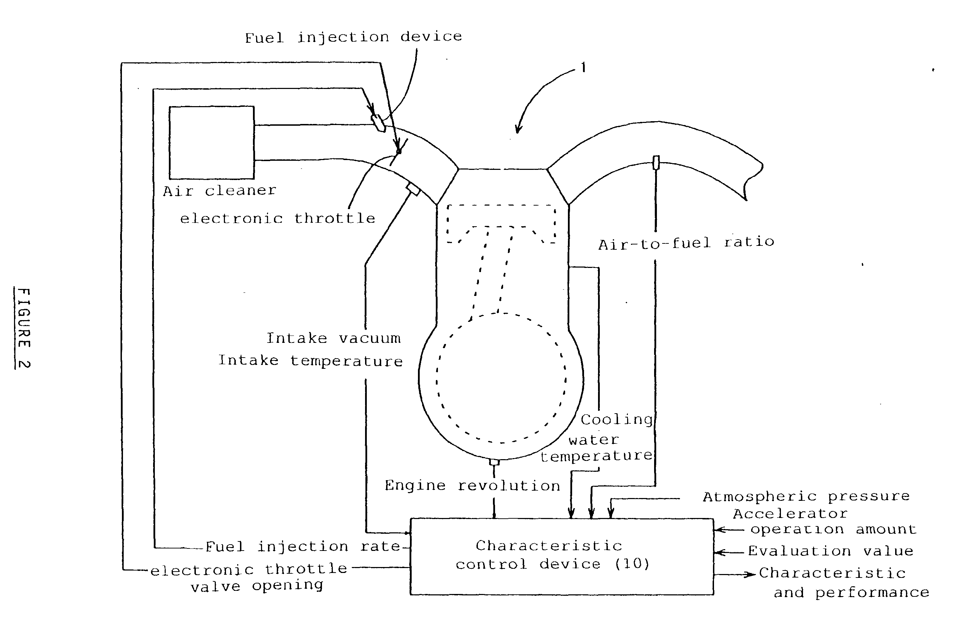

Next, in reference to FIGs. 2 to 13, an embodiment will be described in which the characteristic control device constituted as described above is applied to the control of a vehicle engine.

FIG. 2 generally shows the relation between a characteristic control device 10 of this invention and an engine 1.

As shown, the characteristic control device 10 is constituted to obtain the response performance of the engine output corresponding to the throttle operation and matching the preference of the user.

The characteristic control device 10, receiving input information on the amount of accelerator operation, controls the amount of intake air by operating an electronic throttle valve on the basis of the input information and controls the response performance of the control object, the vehicle engine 1.

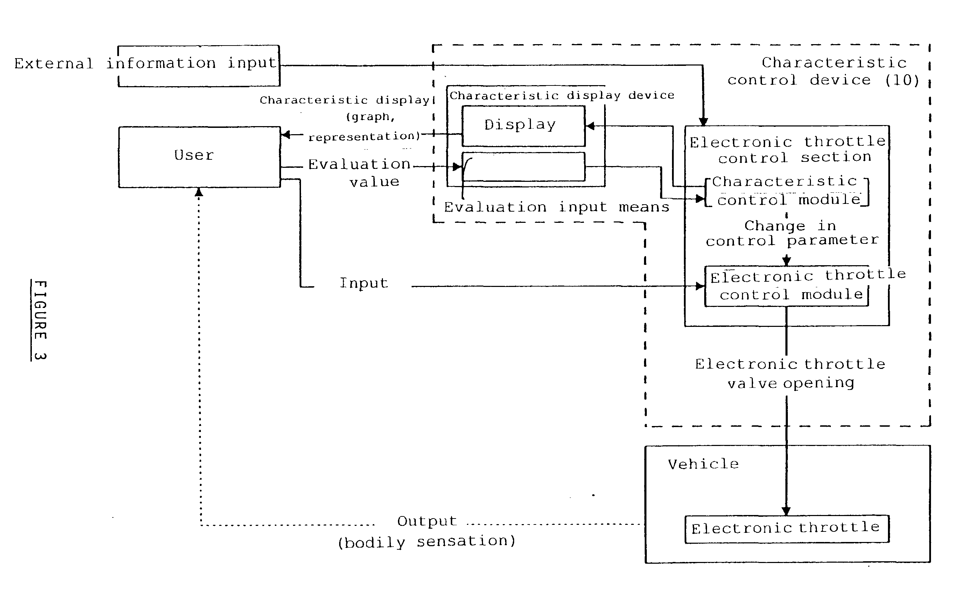

FIG. 3 is a general block diagram of the characteristic control device 10.

As shown, the characteristic control device 10 has an electronic throttle control section and a characteristic display means, separately from each other.

The electronic throttle control section has an electronic throttle control module for determining the opening of the electronic throttle valve and a characteristic control module for optimizing the control parameter of the electronic throttle control module.

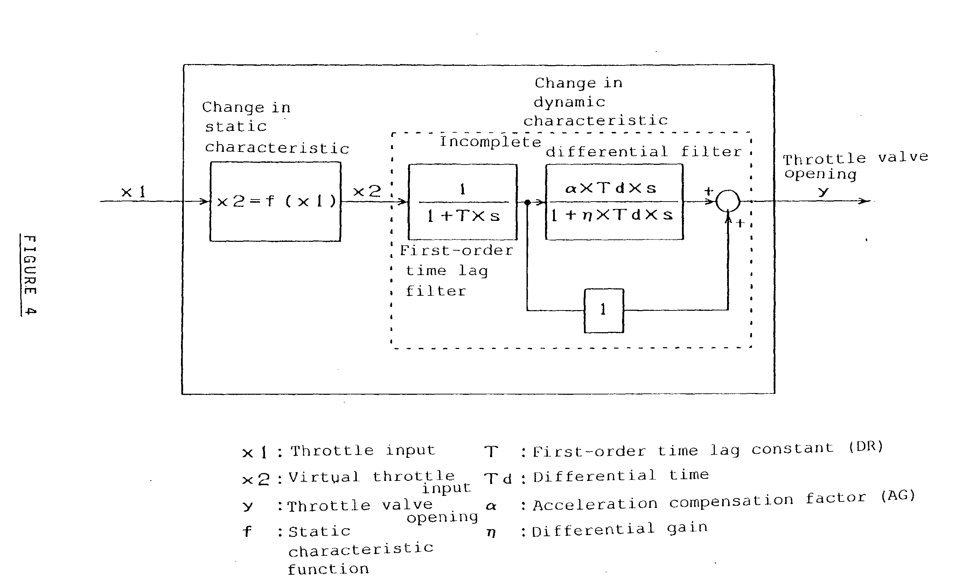

The electronic throttle control module as shown in FIG. 4 determines the opening of the electronic throttle valve on the basis of the amount of accelerator operation by the user. Incidentally, the phrase "accelerator operation amount" as used herein includes the concept of both the "information on the actual accelerator angle" and the "amount of change in the accelerator".

Here, the electronic throttle valve roughly has two characteristics; the static characteristic and the dynamic characteristic.

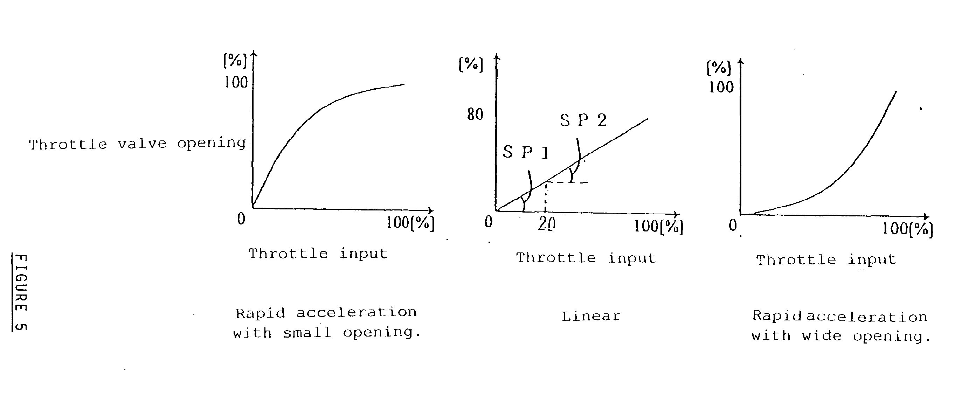

The former characteristic arises from the relation between the accelerator angle and the electronic throttle valve, and affects the stationary running characteristic of a vehicle. FIG. 5 shows graphs of several static characteristics of the throttle. Changing the static characteristic in this way makes it possible to obtain different patterns of throttle opening with the same accelerator angle; a small opening rapid acceleration pattern in which the electronic throttle valve opens when the accelerator angle is small and gradually approaches a wide open state as the accelerator angle increases, a wide opening rapid acceleration pattern in which the throttle valve opens gradually when the accelerator angle is small and rapidly goes to the wide open state as the accelerator angle increases, a proportional pattern in which the throttle opening is in proportion to the accelerator angle. The static characteristic may be in any pattern as long as the throttle opening increases or remains unchanged as the accelerator angle increases, so that various functions can be obtained. In this embodiment, the static characteristic is optimized by optimizing the throttle valve opening rate SP1 for the throttle opening range from 0 % to 20 %, and the throttle valve opening rate SP2 for the throttle opening range from 20 % to 100 %.

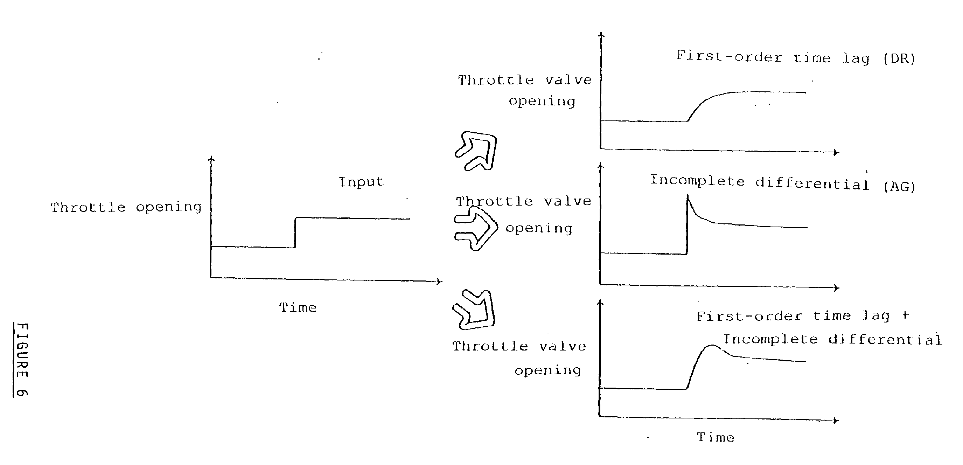

The latter, the dynamic characteristic of the electronic throttle valve, arises from the change in the throttle valve relative to the changing speed of the accelerator, and affects the transient characteristic of the vehicle. Concretely, this characteristic is constituted so that the changing speed of the throttle relative to the changing speed of the accelerator can be changed by the combination of the first-order time lag and the incomplete differential. By the combination of the first-order time lag and the incomplete differential, various patterns of dynamic characteristic are obtained as shown in FIG. 6; a slow response pattern in which the throttle valve opens relatively slowly against the accelerator operation, a quick response pattern in which the throttle valve opens quickly in response to the accelerator operation although a few spikes may appear or a pattern intermediate of the former two. In this embodiment, the dynamic characteristic is optimized by optimizing the first-order time lag constant DR and the acceleration compensation factor AG.

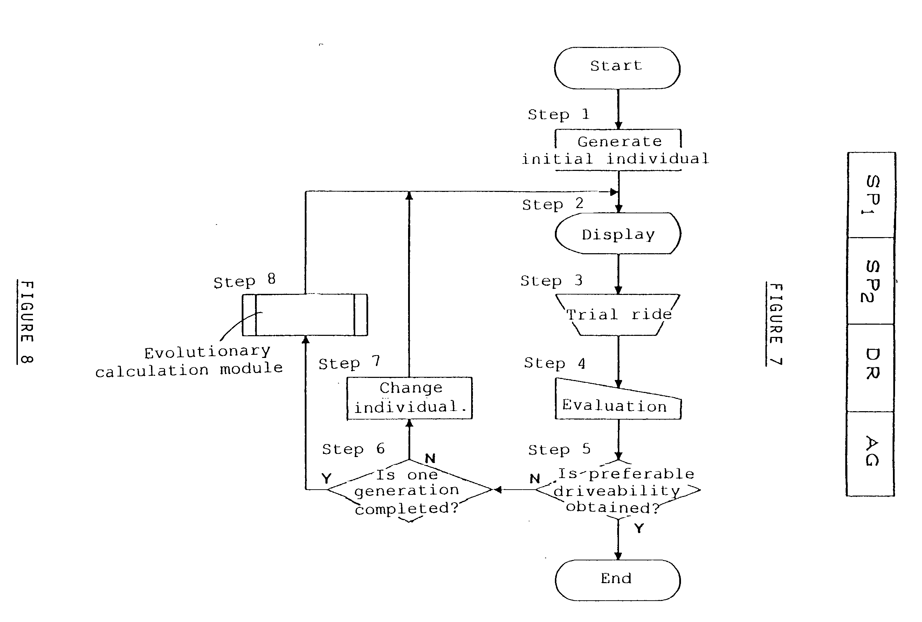

The characteristic control module in the electronic throttle control section employs for example an evolutionary calculation method for the optimization, in which control parameters (throttle valve openings SP1, SP2, the first-order time lag constant DR, and the acceleration compensation factor AG) are coded as an individual as shown in FIG. 7, and the control parameters are optimized by the use of the evolutionary calculation method. It is constituted that the value of each control parameter for which the characteristic is being changed is evaluated, while referring to the characteristic display device to be explained later, by the user actually feeling the response performance while actually operating the electronic throttle using the control parameter. As a result, each control parameter in the electronic throttle module is optimized according to the evaluation made by the user, so that an electronic throttle characteristic (response performance) matching the user's evaluation is obtained.

The method of evaluation by the user in the characteristic changing process as described above is called herein an interactive evaluation.

While this embodiment employs a method in which the static and dynamic characteristics are combined as an individual and the entire combination is optimized, there may be some other methods:

1. For the static characteristic, it is set by the operator and only the dynamic characteristic is optimized.

2. The static and dynamic characteristics are independently optimized.

3. The static characteristic is first optimized and fixed, and next the dynamic characteristic is optimized.

Next, the characteristic changing process in the above-described characteristic control module will be explained.

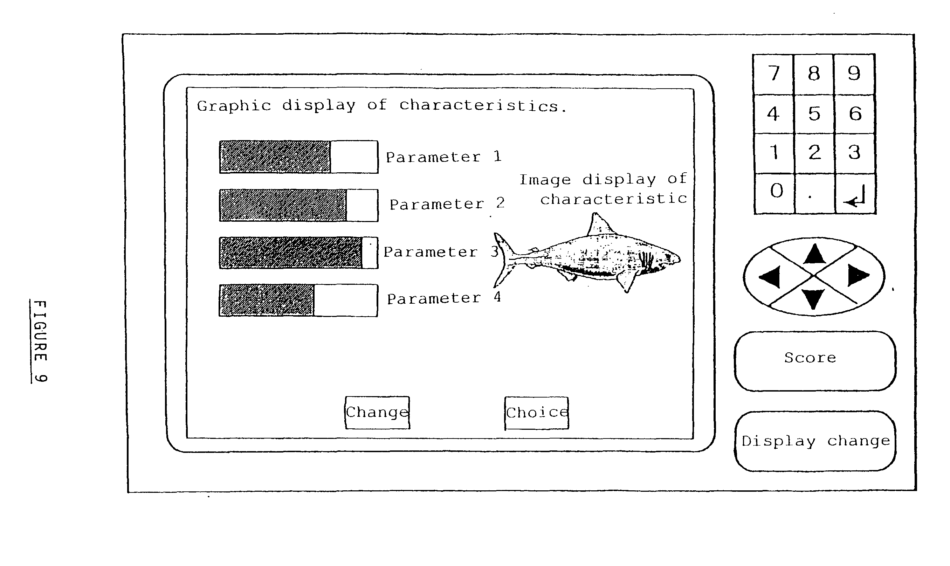

As shown in FIG. 8, first, initial values of the control parameters of the electronic throttle control module to be optimized are determined randomly within a predetermined range to create a first generation of plural initial individuals (step 1). Then, independent graphs for the respective control parameters of the individuals and images of fish that can be associated with the overall characteristic obtained by combining the throttle characteristics based on the control parameters are simultaneously displayed on the characteristic display means (step 2).

Here, the characteristic display device will be explained in reference to FIG. 9 generally showing the device. As shown, the characteristic display device constitutes a user interface comprising a display for displaying the graphs and fish images, and an evaluation inputting means for a user to operate. The display device or the user interface is constituted to be able to simultaneously display the first piece of information on the details of the characteristic of the control parameter in the process of changing the characteristic and the second piece of information on the characteristic of the same control parameter using images of fish that can be intuitively recognized by the user.

In concrete terms, assuming a throttle characteristic vector (s) to be

$$s=[SP1\ SP2\ DR\ AG]^T$$

an overall characteristic is obtained by a linear conversion with an equation

$$As = f$$

where

$$A = \begin{bmatrix} 1000 \\ 0100 \\ 001-1 \end{bmatrix}$$

As a result, the following overall characteristic is obtained:

$$f= [SP1\ SP2\ DR\ ^-AG]^T$$

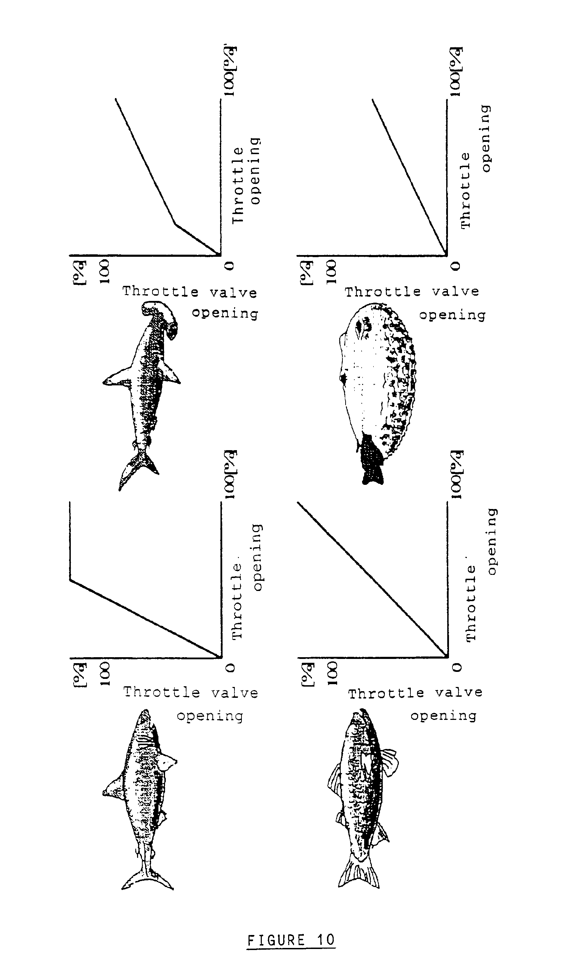

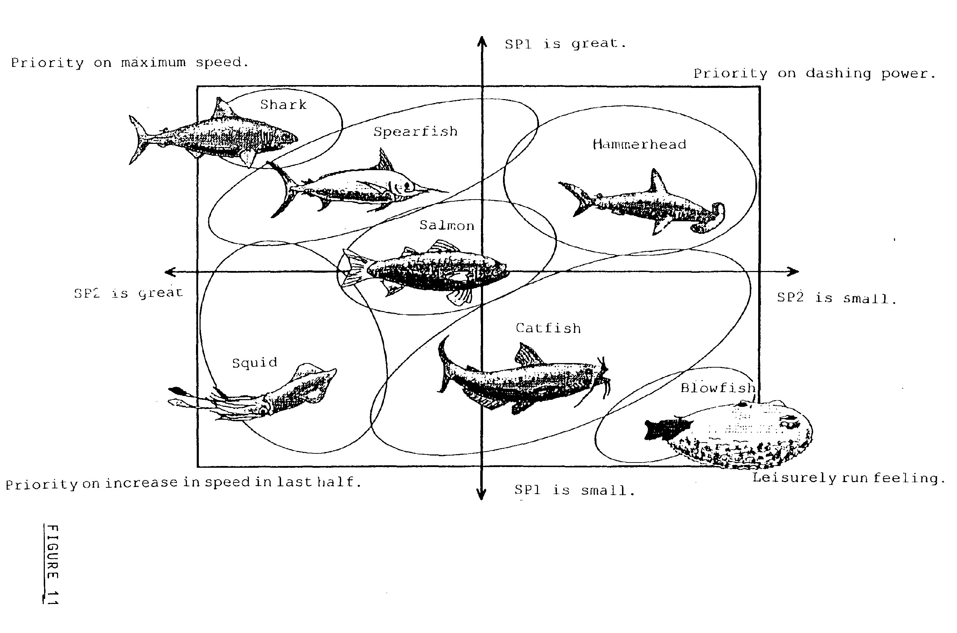

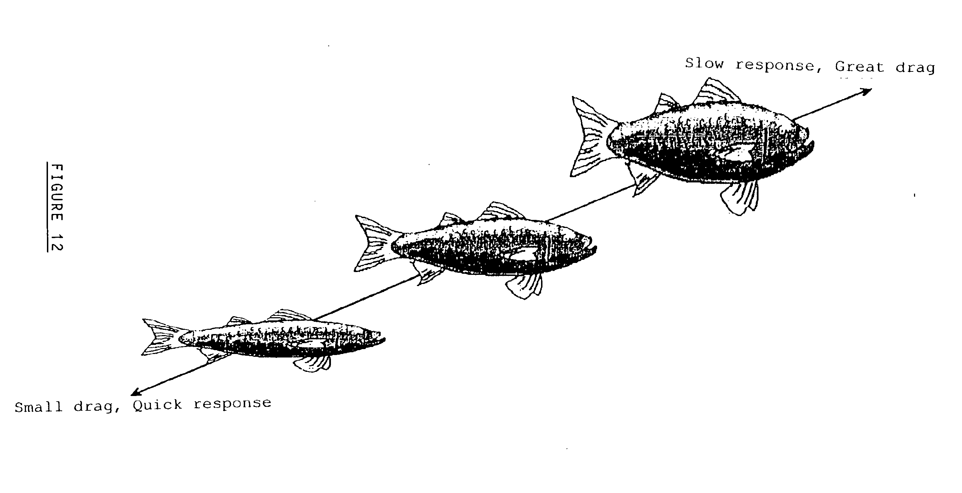

The combination of the static characteristics SP1 and SP2 related to the general feeling of running is made to correspond to the kinds of fish, and the dynamic characteristic DR $^-$AG related to response is made to correspond to the body shape of the fish. To put it concretely, for the static characteristic, if both the SP1 and SP2 are great as shown in FIG. 10, the throttle valve opens widely with a small amount of throttle operation. Therefore, a fierce fish such as a shark is allocated to such a characteristic. If both the SP1 and SP2 are small, the throttle valve opens by a small amount even if the throttle is operated widely. Therefore, such a characteristic is allocated to a slow-moving fish such as a blowfish. FIG. 11 is an image map with fish images allocated to the entire space represented with SP1 and SP2. As for the dynamic characteristic, as shown in FIG. 12, since response becomes sharp as the DR $^-$AG decreases, a slim body shape is allocated for intuitive association with a nimble image. If DR $^-$AG increases, since response becomes sharp, a fat body shape is allocated for intuitive association with a slow-moving image.

Referring to FIG. 8 again, the flow of the characteristic changing process in the characteristic control module will be explained.

After displaying an image of a fish with the characteristic display device (step 2), a trial ride is made using a parameter of one of the first generation individuals (step 3), and a user inputs an evaluation value for the individual (step4). As described before, since the characteristic obtained from each individual during the evolution process is displayed with the characteristic display device using the graph independent for each control parameter and the fish image related to the throttle characteristic, the user can refer to the graph and the fish image displayed on the characteristic display device, input the evaluation value of each individual through an input means (in this embodiment, buttons on the side of the characteristic control device) on the basis of the evaluation of feeling felt during the trial ride. In concrete terms, for example, the evaluation value may be determined from the length of time of pressing a button. In that case, for example, the evaluation value may be calculated with the reciprocal of the pressing time multiplied by a certain constant, or by the use of a fuzzy rule. In this way, the evaluation value can be obtained with a certain extent of accuracy even if there is a certain degree of ambiguity in the human evaluation, and the user can use the evolutionary method in interactive manner. In case the button is pressed and held beyond a predetermined time point, the individual being evaluated may be replaced with another at that time point. In doing so, an individual with a characteristic the user is not satisfied with can be immediately replaced, so that the evolution can be made at a high speed. The replacement of the individual is made only when the vehicle is at rest, to avoid the influence of sudden change in the throttle characteristic while the vehicle is traveling.

Whether a satisfactory response performance is obtained is judged from the evaluation value entered by the user (step 5) In case the satisfactory response performance is obtained, the evolution process is ended; if not, a judgment is made whether test ride and evaluation are completed for all the individuals in one generation (step 6). In case test ride and evaluation are not completed for all the individuals, the parameter of the control module is changed to that of another individual (step 7), and steps of the test ride (step 3) and the evaluation (step 4) are repeated. In case the evaluation for all the individuals are completed, the process goes to the evolutionary calculation module (step 8) to generate individuals of the next generation and to make the test ride and evaluation using the parameters of those individuals.

These steps are repeated until a satisfactory response characteristic is obtained. As a result, the parameter of the electronic throttle control module is optimized.

Here, the evolutionary calculation module used in the above-mentioned each characteristic changing process will be briefly explained using an example of hereditary algorithm.

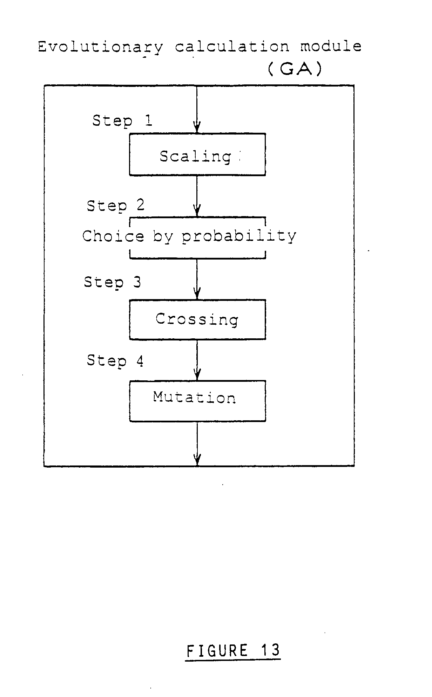

FIG. 13 is a general flowchart of an evolutionary calculation module using the hereditary algorithm as an evolutionary calculation method.

In case a satisfactory characteristic is not obtained with this module after completing evaluation of all the individuals in one generation, individuals of the next generation are generated.

As for scaling (step 1), linear conversion of compatibility is made so that the ratio of maximum compatibility to average compatibility in an individual group becomes constant.

As for choice (step 2), a roulette choice method maybe employed to choose in proportion to the user's evaluation according to probability. It is also possible to use a tournament choice method in which one having the best evaluation value is chosen out of n pieces of randomly chosen individuals.

For crossing (step 3), there are methods such as one-point crossing, two-point crossing, normal distribution crossing, etc. It can happen that the parent of a chosen crossing is the same individual. If this is left as it is, versatility of a group of individuals is lost. Therefore, in case the parent chosen for crossing is the same individual, it is replaced with another individual chosen, so that crossing with the same individual is avoided as much as possible.

As for mutation (step 4), values are changed randomly with a certain probability for each gene seat of individual. In addition to that, a method may also be taken into consideration in which perturbation is applied according to normal distribution. In case different individuals are chosen as the parents for crossing and still they are the same from a hereditary viewpoint, both of the crossing parents are mutated at a higher-than-usual probability.

Aside from the above, another method of generation alternation called "regeneration" may be used in which all the individuals in one generation are replaced at a time.

In case the generation alternation is strictly applied, there is a risk that individuals of high evaluations are destroyed. Therefore, an elite conservation strategy may be used in which elite individuals (any number of individuals given with high evaluations) are unconditionally left to the next generation.

With this embodiment described above, in the process of optimizing the characteristic of the electronic throttle, the change in the characteristic to be evaluated is displayed with graphs that are independent for every control parameter and with representations of fish that can be identified by the user. Therefore, even unskilled users can intuitively recognize the characteristics from the representations. Since the graphs are displayed simultaneously with the representations, the user can learn the relation between the graph and the characteristic through the representation as a medium. This enables a beginner to evaluate, easily without concern while looking at the representations, even characteristics having subtle differences that are hard to evaluate with bodily sensation only. Since the user can learn the relation between the control parameter and the characteristic in this process, the user gradually becomes to understand the characteristic from the graphs. This makes it possible to make more fine evaluations and settings. It is further possible to omit reading manuals to grasp the relation between the characteristic and image. It also minimizes the possibility of the user mistaking the evaluation in the process of evolution and the evolution proceeding to a wrong direction.

It is preferable that the display device be placed in a position the user can see easily while driving the vehicle. With such a positioning, other pieces of information such as speed, revolution, etc. can also be displayed either simultaneously or by alternate switching.

In the above embodiment, the characteristic display device displays all the characteristics of the individuals and the characteristic of the individual used in the test ride after generating the individuals, before the test ride. However, it is a matter of course that the time point of displaying with the characteristic display device is not limited to that in this embodiment but may be at any time point, for example after the test ride.

In the above embodiment, the evolutionary calculation method is used for the optimization calculation in the characteristic control module. However, the method of optimization calculation is not limited to that used in this embodiment but maybe the heuristic method other than the evolutionary calculation method, for example vicinity search method, in concrete terms the mountain climbing method, the simulated annealing method, the tab search method, etc.

With the characteristic control device for the control object of the embodiment, the user can comprehend intuitively the relation between the characteristic and the representation. Therefore, for example, the characteristic display device and the characteristic control module may be combined to form a characteristic changing device that is removable from the vehicle. This enables the user to optimize control parameters at home, etc., or to test the directionality for optimization without using the vehicle. This constitution makes it possible to optimize the characteristics of the vehicle in any place and time. This makes it possible to shorten the time for the optimization as a matter of course, and to provide the user with the pleasure of as if rearing the control object even when the control object is not actually used. For example it is possible to obtain, using the characteristic changing device in advance at home, the characteristics matching the weather and environment of the time and place where the user is going to visit by the vehicle.

As described above, the characteristic control device of this embodiments for a control object comprises;

a basic control module for determining the control amount for controlling the output of the control object on the basis of specified input information and control parameters for relating the input information with an output given to the control object,

a characteristic control module for generating the control parameters by performing specified evaluation on the basis of the input information, and

a characteristic display means for displaying the characteristics of the control parameters obtained with the characteristic control module, and is constituted that

the characteristic display means is constituted to be capable of displaying simultaneously a first piece of information displaying the details of the characteristics of the control parameters and a second piece of information displaying the characteristics of the control parameters using representations the user can intuitively recognize.

Therefore, the embodiments provides the following effects: Even users without expertise can understand intuitively from the second piece of information the characteristic of the control object and the user becomes to learn the relation between the characteristic and the first piece of information representing the detailed contents using the second piece of information as a medium.

According to the embodiment, the second piece of information in the characteristic display means is an image that can be associated with the particular of the characteristic by the user.

As can be taken from the embodiment described above, the characteristic display means comprises an input means for permitting the user directly entering the evaluation of the control parameter in the characteristic control module. The characteristic control module generates control parameters using an evolutionary calculating method.

The embodiments described above teaches a characteristic control device for controlling characteristics of a control object comprising a basic control module for controlling an output of the control object on the basis of specified input information and a control parameter, a characteristic control module for generating the control parameter, and a characteristic display means for displaying the characteristic of the control parameter. Said characteristic display means is provided for displaying details of the characteristic of the control parameter and a representation of the characteristic of the control parameter. Said characteristic display means is provided for simultaneously displaying details of the characteristic of the control parameter and the representation of the characteristic of the control parameter.

The characteristic control device according to the embodiment has the basic control module which is provided for determining a control amount for controlling the output of the control object on the basis of the specified input information and the control parameter for relating the input information to an output given to the control object. The characteristic control module is provided for generating the control parameter by performing specified evaluation on the basis of the input information. The characteristic display means is provided for displaying the characteristic of the control parameter obtained with the characteristic control and for displaying a first piece of information displaying the details of the characteristic of the control parameter and a second piece of information displaying the representation of the characteristic of the control parameter.

According to the embodiment, the representation of the characteristic of the control parameter in the characteristic display means is an image for association with a particular of the characteristic of the control object by a user.

The characteristic display means of the embodiment comprises an input means for directly entering the evaluation of the control parameter in the characteristic control module.

The characteristic control module is provided for generating control parameters using an evolutionary calculating method.

The embodiments described above also teaches a method for controlling characteristics of a control object. Said method comprises the steps of:

- generating a control parameter,
- displaying the characteristic of the control parameter, wherein details of the characteristic of the control parameter and a representation of the characteristic of the control parameter are displayed,
- controlling an output of the control object on basis of specified input information and the control parameter.

The method as can be taken from the description of the embodiments further comprises simultaneously displaying the characteristic of the control parameter, wherein details of the characteristic of the control parameter and a representation of the characteristic of the control parameter are displayed.

Method according to the teaching of the embodiments comprises the steps of:

- determining a control amount for controlling the output of the control object on basis of the specified input information and the control parameter for relating the input information to an output given to the control object,
- generating the control parameter by performing specified evaluation on the basis of the input information,
- displaying the characteristic of the control parameter obtained with the characteristic control and displaying a first piece of information displaying the details of the characteristic of the control parameter and a second piece of information displaying the representation of the characteristic of the control parameter.

According to the method for controlling characteristics of a control object of the embodiment, the representation of the characteristic of the control parameter in the characteristic display means is an image for association with a particular of the characteristic of the control object by a user.

The method as can be taken from the description of the embodiments further comprises directly entering the evaluation of the control parameter in the characteristic control module.

Method according to the teaching of the embodiments comprises the step of generating control parameters using an evolutionary calculating method.

**Claims**

1. Characteristic control device for controlling characteristics of a control object comprising:
a basic control module for controlling an output of the control object on the basis of specified input information and a control parameter, a characteristic control module for generating the control parameter, and a characteristic display means for displaying the characteristic of the control parameter, wherein said characteristic display means is provided for displaying details of the characteristic of the control parameter and a representation of the characteristic of the control parameter.

2. Characteristic control device according to claim 1, **characterized in that** said characteristic display means is provided for simultaneously displaying details of the characteristic of the control parameter and the representation of the characteristic of the control parameter.

3. Characteristic control device according to claim 1 or 2, **characterized in that** the basic control module is provided for determining a control amount for controlling the output of the control object on the basis of the specified input information and the control parameter for relating the input information to an output given to the control object, and the characteristic control module is provided for generating the control parameter by performing specified evaluation on the basis of the input information, the characteristic display means is provided for displaying the characteristic of the control parameter obtained with the characteristic control and for displaying a first piece of information displaying the details of the characteristic of the control parameter and a second piece of information displaying the representation of the characteristic of the control parameter.

4. Characteristic control device according to at least one of the claims 1 to 3, **characterized in that** the representation of the characteristic of the control parameter in the characteristic display means is an image for association with a particular of the characteristic of the control object by a user.

5. A characteristic control device according to at least one of the claims 1 to 4, **characterized in that** the characteristic display means comprises an input means for directly entering the evaluation of the control parameter in the characteristic control module.

6. A characteristic control device according to at least one of the claims 1 to 5, **characterized in that** the characteristic control module is provided for generating control parameters using an evolutionary calculating method.

7. Method for controlling characteristics of a control object comprising:

- generating a control parameter,
- displaying the characteristic of the control parameter, wherein details of the characteristic of the control parameter and a representation of the characteristic of the control parameter are displayed,
- controlling an output of the control object on basis of specified input information and the control parameter.

8. Method according to claim 7, **characterized by** simultaneously displaying the characteristic of the control parameter, wherein details of the characteristic of the control parameter and a representation of the characteristic of the control parameter are displayed.

9. Method according to claim 7 or 8, **characterized by**

- determining a control amount for controlling the output of the control object on basis of the specified input information and the control parameter for relating the input information to an output given to the control object,
- generating the control parameter by performing specified evaluation on the basis of the input information,
- displaying the characteristic of the control parameter obtained with the characteristic control and displaying a first piece of information displaying the details of the characteristic of the control parameter and a second piece of information displaying the representation of the characteristic of the control parameter.

10. Method according to at least one of the claims 7 to 9, **characterized in that** the representation of the characteristic of the control parameter in the characteristic display means is an image for association with a particular of the characteristic of the control object by a user.

11. Method according to at least one of the claims 7 to 10, **characterized by** directly entering the evaluation of the control parameter in the characteristic control module.

12. Method according to at least one of the claims 7 to 11, **characterized by** generating control parameters using an evolutionary calculating method.

Control device

Control object

A

B

Characteristic display means

User's evaluation

Characteristic control module

Control parameter

Control amount

Output section

Basic control module

Operation

Display of characteristic information

Characteristic generation state display information

Input section

Input information

Feeling

Operator

Operation amount

External environment

State measure

FIGURE 1

FIGURE 2

FIGURE 3

FIGURE 4

Change in
static
characteristic

Change in
dynamic
characteristic

Incomplete differential filter

Throttle valve
opening
y

$x1$ →

$x2 = f(x1)$

$x2$ →

First-order
time lag
filter

$$\dfrac{1}{1+T \times s}$$

$$\dfrac{\alpha \times T d \times s}{1 + \eta \times T d \times s}$$

$+$
$+$

$1$

$x1$ : Throttle input          $T$ : First-order time lag constant (DR)

$x2$ : Virtual throttle input     $Td$ : Differential time

$y$ : Throttle valve opening      $\alpha$ : Acceleration compensation factor (AG)

$f$ : Static characteristic function      $\eta$ : Differential gain

FIGURE 5

Throttle valve opening

[%]
100

0          100[%]

Throttle input

Rapid acceleration
with small opening.

[%]
80

S P 2

S P 1

0      20      100[%]

Throttle input

Linear

[%]
100

0          100[%]

Throttle input

Rapid acceleration
with wide opening.

13

EP 1 152 312 A2

FIGURE 6

14

| SP$_1$ | SP$_2$ | D R | AG |

FIGURE 7

Start

Step 1 — Generate initial individual

Step 2 — Display

Step 3 — Trial ride

Step 4 — Evaluation

Step 5 — Is preferable driveability obtained?

N

Y — End

Step 6 — Is one generation completed?

N — Step 7 — Change individual.

Y

Step 8 — Evolutionary calculation module

FIGURE 8

Graphic display of characteristics.

Parameter 1

Parameter 2

Image display of characteristic

Parameter 3

Parameter 4

Change    Choice

| 7 | 8 | 9 |
| 4 | 5 | 6 |
| 1 | 2 | 3 |
| 0 | . | ↵ |

Score

Display change

FIGURE 9

16

EP 1 152 312 A2

FIGURE 10

Priority on dashing power.

SP2 is small.

Leisurely run feeling.

SP1 is great.

Hammerhead

Blowfish

Catfish

SP1 is small.

Spearfish

Salmon

Shark

Squid

SP2 is great

Priority on maximum speed.

Priority on increase in speed in last half.

FIGURE 11

FIGURE 12

Evolutionary calculation module
(GA)

Step 1

Scaling

Step 2

Choice by probability

Step 3

Crossing

Step 4

Mutation

FIGURE 13